# EUROPEAN PATENT SPECIFICATION

(11) **EP 3 597 359 B1**
(45) Date of publication and mention of the grant of the patent: **11.01.2023**
(21) Application number: 19186523.7
(22) Date of filing: 16.07.2019
(51) Int. Cl.: B23Q 1/52, B23Q 1/66, B23Q 3/06, B23Q 39/04

(54) **MULTI-SPINDLE NUMERICAL CONTROL MACHINE TOOL WITH AUTOMATIC ADJUSTMENT AND WITH A DEVICE FOR GRIPPING THIN PLATES TO BE MACHINED AND METHOD FOR MACHINING SAID THIN PLATES**
NUMERISCH GESTEUERTE MEHRSPINDELWERKZEUGMASCHINE MIT AUTOMATISCHER JUSTIERUNGVORRICHTUNG ZUM GREIFEN VON ZU BEARBEITENDEN DÜNNEN PLATTEN UND VERFAHREN ZUR BEARBEITUNG DIESER DÜNNEN PLATTEN
MACHINE-OUTIL MULTIBROCHES À COMMANDE NUMÉRIQUE À RÉGLAGE AUTOMATIQUE AVEC DISPOSITIF DE PRÉHENSION DE PLAQUES MINCES ET PROCÉDÉ D'USINAGE DESDITES PLAQUES MINCES

(30) Priority: 17.07.2018 IT 201800007253
(43) Date of publication of application: 22.01.2020
(73) Proprietor: Fagima S.p.A., 50028 Tavarnelle Val di Pesa (FI) (IT)
(72) Inventor: Falchini, Massimo, 50026 San Casciano Val di Pesa (FI) (IT); Montani, Daniele, 50136 Firenze (IT); Maiorelli, Alessandro, 50013 Campi Bisenzio (FI) (IT)
(74) Representative: Nesti, Antonio

(56) References cited:
- WO-A1-2013/023410
- CN-A- 108 000 013
- CN-B- 102 513 768

## Description

### Field of the invention

The invention relates to a numerical control multi-spindle machine tool comprising a device for gripping thin plates to be machined in numerical control machine tools with automatic adjustment and a multi-spindle machine made accordingly, in particular a device capable of varying its opening so as to automatically adapt to and grip plates of different sizes to be machined in numerical control machine tools and the machine built accordingly which provides for the use of a plurality of spindles for the simultaneous machining of opposite sides; and a method for machining thin plates to be machined in numerical control machine tools with a plurality of spindles, in particular a method which allows the machining of thin plates with a plurality of spindles for the simultaneous machining of opposite sides.

### Background art

At the state of the art, inventions for the use on numerical control machine tools to fix parts to be machined on the machining plane by gripping equipment are known.

These grips are usually made with brackets placed on the machining plane, generally horizontal, and arranged along grooves formed thereon on which they are free to slide by means of a prismatic guide and consequently be positioned by hand at the piece to be grasped.

Means for manually or pneumatically fixing the same by pulling a movable part which fixes the bracket to the machining plane are usually placed integrally with such brackets.

In specific machining operations, in particular in the fashion accessory sector and in the consumer electronics sector, machining usually takes place on slender sheets, with variable thicknesses indicatively between 2 and 20 mm, while the dimensions in length and width of the plate to be machined are typically 600mm for a variable width of 40-200mm, which are gripped with the usual gripping means to be machined on 3 axis numerical control machines in a horizontal position, first on one side and then on the opposite side, overturning the machining plane.

The system has some inefficiencies, in particular linked to the fact of having to overturn the piece to be able to machine it on both sides individually, with a consequent waste of time and an increase in machining costs.

In order to solve the problem, it is necessary to machine the piece on both sides simultaneously with the use of a multitude of opposing spindles.

However, in order to work the pieces simultaneously on both sides by using a plurality of spindles, it is necessary to work with the thin plate to be machined in a vertical position, so as not to impair with the machining residues, generally called chips, the effectiveness of one or more spindles that would be in the position below the piece to be machined.

However, the simultaneous machining of thin plates entails the need to provide for the control, by means of specific physical devices, of the vibrations and flexures induced by the two or more tools which simultaneously work both sides, vibrations and flexures which result in poor machining precision, not compatible with machining on a numerical control machine.

It is also necessary that the gripping system is able to adapt automatically to the variability, typically in thickness, of the pieces to be machined according to the necessary machining.

Similarly, the loading, unloading and adjusting system, as well as the gripping system, must be completely automated and must not require the intervention of operators so as to allow the unmanned operation of the numerical control machine.

It is therefore desirable to have, first of all, a device for gripping thin plates to be machined in numerical control machines with automatic adjustment and a multi-spindle machine made accordingly, in particular a device capable of varying its opening so as to automatically adapt and grasp plates of different sizes to be machined in numerical control machine tools and the machine made accordingly, which involves the use of a plurality of spindles for the simultaneous machining of opposite sides.

At present some solutions have been presented for the automatic fixing to the machining plane, such as for example the system described in FI2012A000197 where a horizontal machining plane is described for machine tools with automatic locking of pieces of variable size and which has fixed actuators with respect to the plane, supporting clamping brackets capable of moving along parallel lines to adapt to the format of the piece, variable both in size and in geometric configuration.

Another solution is presented in WO9212816, where a machine tool is described comprising gripping brackets capable of moving on a plane, once again horizontal, with the task both of feeding the material to be machined on the machining plane and of providing the movement of the same piece being machined while the piece is placed between two or more opposing spindles in vertical position, one at the top one at the bottom with respect to the piece, in particular for use in woodworking.

Other proposed systems, on the other hand, provide for the use of perforated planes with suction which allow the piece to be held on the plane by the pressure difference between the atmospheric pressure and the vacuum generated below the surface.

In both proposed cases, the position of the plane is horizontal and the grip is obtained by exploiting the constraint of the plane and the consequent contribution of the force of gravity on the same to keep the piece to be machined on the reference plane while the actuators act, both in the movement phase and in the gripping phase.

In particular, the second solution, that is the solution described in WO9212816, also provides for the use of a multitude of spindles, symmetrical to the workpieces in the vertical direction, i.e. above and below the workpieces, also due to the position constraint of the machining plane for gripping and feeding the piece.

This involves numerous disadvantages in that, in the field of machining with machine tools, material is removed from the workpiece, generating waste called "chips" which in the case of materials of high hardness, such as steel or metals in general, leads to damage of the parts of the machine exposed to their deposit.

The application described herein furthermore concerns details that are not particularly slender, characterised however by significant thicknesses and, if applied on slender details, would entail a reduced flexural and vibrational component but limited to identical and specular machining operations on both sides, a situation that greatly limits the production capacity of the method.

In the application described in WO9212816, there are therefore many problems that can arise, in particular in relation to all the parts intended for guiding or machining the spindles placed under the plane, due to chip deposition with consequent impairment of the system's effectiveness; in fact, the application is mainly used in the wood sector. Another problematic aspect consists in the fact that part of the movement of the system is assigned precisely to the movement of the piece generated by the clamps, which in turn are also responsible for feeding the parts to be machined to the machining area. This creates a coupled system, or a system where the efficiency and effectiveness of the parts is mutually influenced in the process, a situation that creates a technically called "trial and error" cycle, i.e. repeated attempts aimed at minimizing errors, which is typically poorly efficient and therefore not viable in a high precision system.

Moreover, since the movement along the two axes of the piece is entrusted to the movement of the brackets, this means that the opposite spindles can only perform specular operations, being able to move exclusively along the axis orthogonal to the piece, conventionally called z.

In relation to what is described in FI2012A000197, only the use of brackets capable of moving independently along parallel lines to adapt to the shape of the piece is described, but in a traditional machining architecture, suitable for resolving exclusively the problems related to adaptation to the format but not to machining efficiency, with the use of a plurality of spindles.

Another example is shown instead in CN202726648, where a numerically controlled machine capable of machining the piece by means of a plurality of opposed spindles operating on a vertical plane; this machine, however, does not have clamping systems which are automated or suitable for managing slender workpieces, limiting itself to highlighting the possibility of operating with opposed spindles on traditional gripping means which therefore, as previously mentioned, are not very efficient.

Moreover, the proposed solutions for machining with opposed spindles are characterised by architectures with considerable dimensions, while machines for machining slender details related to the world of fashion and consumer electronics must be typically small, compact and lightweight.

Also in this case, a solution dedicated to the machining of details of significant size, not of slender plates having a reduced thickness, is illustrated, since the systems on both sides are completely independent and no way of obviating the consequent and inevitable vibrations and bending of the detail being machined is described in the case of slender details.

Therefore, the systems in the state of the art have poor efficiency with respect to the problems connected with the gripping of thin parts, of variable dimensions, in an automatic manner so as to be able to work on a multi-spindle machine tool simultaneously on both sides.

From CN108000013 it is disclosed a head-tail frame transposition machine comprising an overturning frame capable of rotating in the vertical direction, a rotation frame arranged on a supporting plate which is capable of rotating in the horizontal direction, and a gripping device used for clamping a workpiece which is arranged on the rotation frame for passing from a loading and unloading position to an operating position during machining of the work piece. This document forms the basis of the preamble of claim 1.

Moreover, the proposed solutions for machining with opposed spindles are characterised by architectures with considerable dimensions, while machines for machining slender details related to the world of fashion and consumer electronics must be typically small, compact and lightweight.

Also in this case, a solution dedicated to the machining of details of significant size, not of slender plates having a reduced thickness, is illustrated, since the systems on both sides are completely independent and no way of obviating the consequent and inevitable vibrations and bending of the detail being machined is described in the case of slender details.

Therefore, the systems in the state of the art have poor efficiency with respect to the problems connected with the gripping of thin parts, of variable dimensions, in an automatic manner so as to be able to work on a multi-spindle machine tool simultaneously on both sides.

### Object of the Invention

The need is therefore felt for a device for gripping thin plates to be machined in numerical control machine tools with automatic adjustment and a multi-spindle machine made accordingly, in particular a device capable of varying its opening so as to automatically adapt to and grip plates of different sizes to be machined in numerical control machine tools and the machine built accordingly which provides for the use of a plurality of spindles for the simultaneous machining of opposite sides; and for a method for machining said thin plates with a plurality of spindles, in particular a method which allows the machining of thin plates with a plurality of spindles for the simultaneous machining of opposite sides.

### Summary of the Invention

These objects have been achieved by a machine and a method according to appended claims 1 and 8.

A first advantage consists in the fact that the device is able to grip thin plates adapting automatically to their dimensions.

A further advantage consists in the fact that the device allows easy automatic loading of the slender parts to be machined, regardless of their size, on a horizontal plane in a traditional manner by means of a conventional Cartesian loading system.

A further advantage consists in the fact that the device and the machine realized consequently allow the machining of slender plates on a vertical plane on both sides following the use of a plurality of opposed spindles which operate in a symmetrical and independent manner on said slender plates, thus decoupling the system and allowing an easy evacuation of the machining residues, commonly referred to as chips, without affecting the efficiency of one or more of the aforementioned spindles.

A further advantage consists in the fact that the method allows to reach a high machining efficiency by minimizing locally, that is in the machining area where there is interest in reducing these phenomena, the flexural and vibrational components originating from the simultaneous machining of the slender detail on both sides with a plurality of spindles.

These and other advantages will be better understood by anyone skilled in the art from the description below and the accompanying drawings, given as a non-limiting example, wherein:
- fig. 1 shows a perspective overview of the gripping device;
- fig. 2 shows a detailed view from above of the device showing the gripping actuation means;
- fig. 3 shows a detailed side view of the device showing the gripping actuation means;
- fig. 4 shows a perspective view of the device assembled on the frame in the loading and inspection position of the pieces to be machined, with some parts removed for a better understanding of the drawing;
- fig. 4a shows a detail of a gripping system;
- fig. 5 shows a perspective view of the device assembled on the frame in the working position;

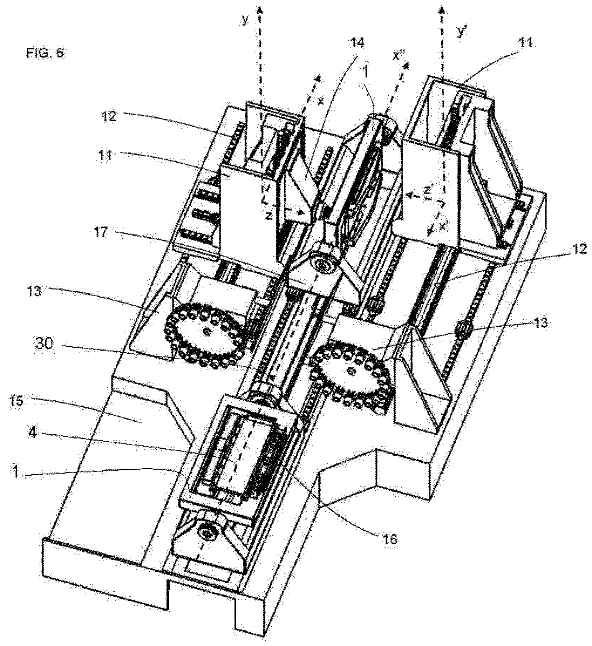

- fig. 6 shows a perspective view of the machine realized accordingly;

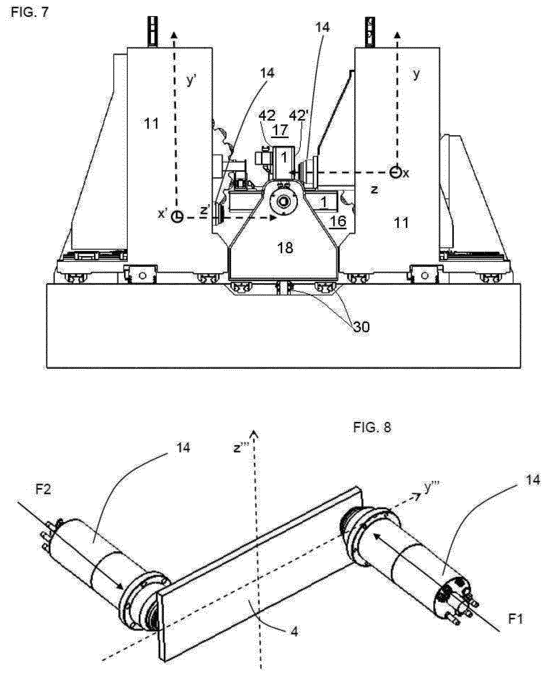

- fig. 7 shows a side view of the device in working position between the opposed spindles;
- fig. 8 shows a descriptive view of the combined action of a pair of opposite spindles;

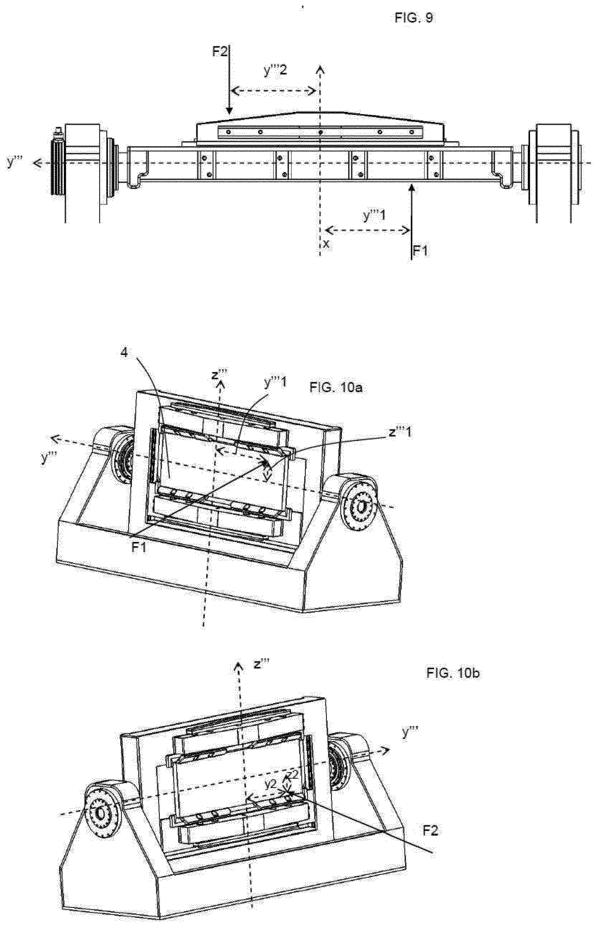

- fig. 9 shows a top view of the combined action of a pair of opposite spindles;
- fig. 10a shows the front view of the action of one of the forces of a pair of opposite spindles;
- fig. 10b shows the rear view of the action of one of the forces of a pair of opposite spindles;

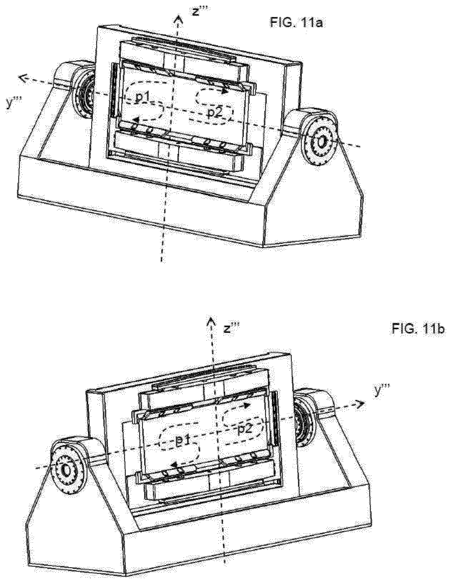

- fig. 11a shows the complete example path in the front view of one of the spindles of a pair of opposite spindles;
- fig. 11b shows the complete example path in the rear view of one of the spindles of a pair of opposite spindles;

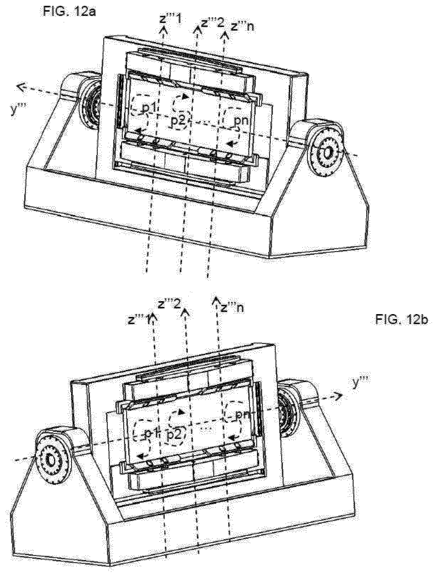

- fig. 12a shows the complete example path in the front view of several spindles of a multitude of opposed spindles;
- fig. 12b shows the complete example path in the rear view of several spindles of a multitude of opposed spindles;

### Detailed Description

With reference to the appended drawings, described herein is a preferred embodiment of a numerical control multi-spindle machine tool with automatic adjustment comprising a device for gripping thin plates to be machined, in particular with a device capable of varying its opening so as to automatically adapt and grasp slender plates of different sizes to be machined in numerical control machine tools and the machine made accordingly, which involves the use of a plurality of spindles for the simultaneous machining of opposite sides.

In the context of the present description, a slender or thin plate or slab is understood to mean a plate which, if subjected to loads orthogonal to the major surface during a machining operation, may tend to flex in an undesired manner.

For example, as illustrated in the drawings, a plate 4 with a markedly two-dimensional development with a machining surface 42 much larger than the thickness of the edges 41 of the plate, for example in a ratio between 1:10 and 1:600.

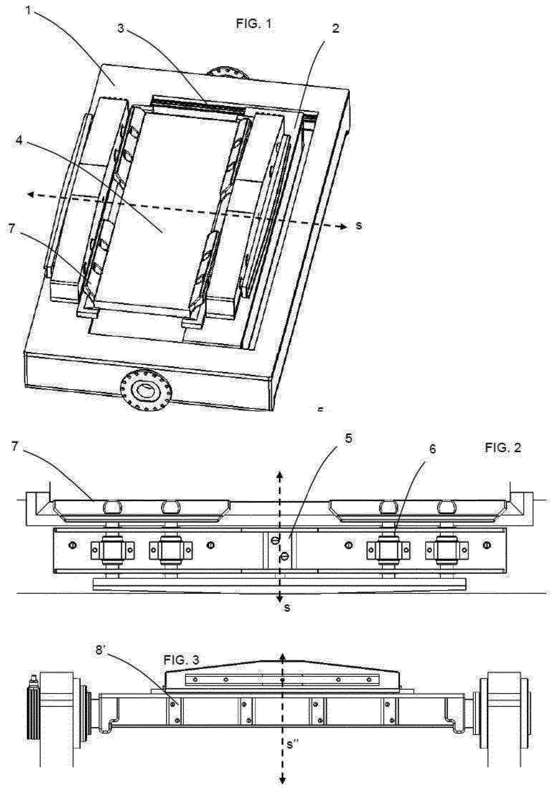

The device includes
a machining plane P for the support of a slender plate 4 to be machined
a first frame 1 shaped like a framework and integral with the machining plane P on which automatically actuatable first gripping means 71 are mounted,
a second frame 2, on which in turn gripping means 72 are mounted, opposite to the gripping means 71, movable with respect to said first frame 1 along a transverse line s approaching and away from it so as to automatically adjust the mutual distance between the gripping means 71 and 72 as the dimensions in the direction s of the slender plate 4 to be machined vary (fig. 1),

The movable frame 2 is moved along the direction s in an automatic manner by actuators which can be actuated on command, not shown, and prismatic guides 3 integral with the first frame 1.

Preferably, the gripping means 71, 72 consist of presser elements provided with a surface 74 which, in use, is intended to press on the machining surface 42 of the plate 4 parallel to the plane P.

In use, said gripping means 71, 72 are further implemented by means of respective actuators 6 capable of moving along the direction s away from and approaching the edge 41 of the slender plate 4 to be machined so as to be able to free a space for loading and unloading the same on and from the plane P before and after machining and to be able to grip it firmly in contrast with the first frame 1 and the movable frame 2 during the machining steps.

The gripping means 71 integral with the first frame 1 and the gripping means 72 integral with the movable frame 2 can also be actuated, preferably independently, by means of actuators 8' so as to be able to move both along the direction s" (fig. 2), i.e. moving away from and approaching the plane P, and in the transverse direction s or away and approaching the pressure surface 74 from the edge 41 of the slender plate 4 to be machined.

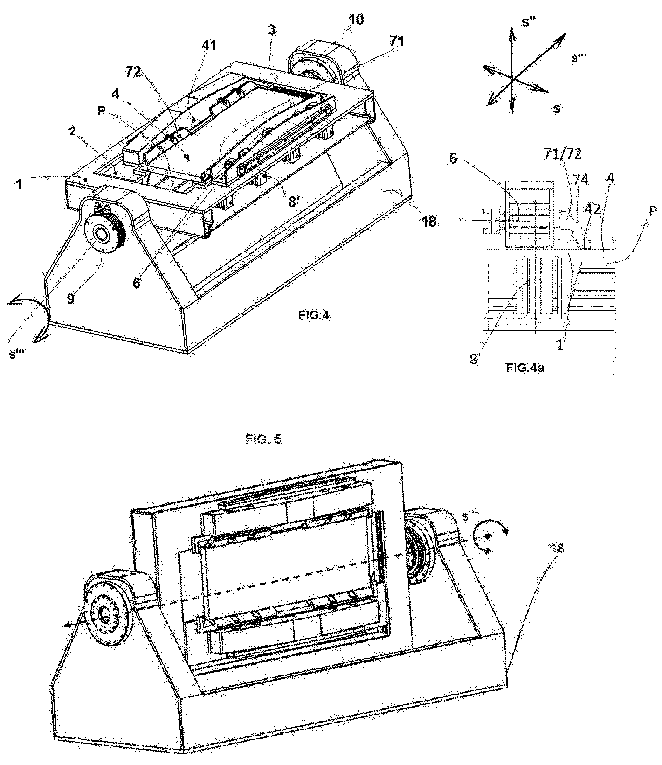

The device further comprises a rotating actuator 9 fixed to a base frame 18 where there is an idle support 10 opposite to the rotating actuator 9, on whose rotating axis the first frame 1 is fixed so as to be able to rotate around the axis s'" and bringing the device from a horizontal position 16 of the machining plane P, to be taken during the workpiece loading and unloading phases and for inspection (fig. 4) to a vertical operating position of the machining plane P to be taken during machining of the plate 4 (fig.5).

The device can thus operate on a machine realized accordingly comprising a base 15, a plurality of tool storage compartments 13, systems for guiding and actuating the movable parts 12 and a plurality of spindles 14 which can be equipped with the tools and moved by independent systems 11.

In operation, the slender plate 4 to be machined is loaded onto the plane P of the device by means of a common automatic loading system, such as for example a Cartesian robot that picks up the workpiece from a warehouse and carries it over the device in the loading and inspection position 16.

While waiting for the slender plate 4 to be machined, the gripping means 71, 72 are in the position of maximum distance from the theoretical position of the slender plate on the device along the directions s and s'" so as to free the necessary space for loading said plate.

Following the automatic action of the actuation and guide systems 3 the movable frame 2 moves to the correct distance to support the said thin plate 4 to be machined according to its width, known from the machining program, said plate is then lowered onto the plane P, identified by support faces of the fixed frame 1 and the movable frame 2, stopping on them by gravity.

The gripping means 72 then move first along the direction s approaching the edge 41 of the said plate 4 actuated by the actuators 6 and once they have completed their travel along the direction s they move along the direction s" implemented by the actuators 8' towards the surface 42 of the plate 4 until the abutments 74 of the pressers 71, 72 meet the surface 42 of said plate 4 and exert a gripping force on it such as to hold it firmly on the fixed frame 1 and on the movable frame 2.

The device, or rather the frame 1, is then made to rotate around the axis s'" until it is in a vertical operating position 17.

In this way the slender plate 4 is firmly secured in an automatic manner as its dimensions vary and is brought to a suitable position for machining between a plurality of opposed spindles in a safe and efficient manner.

The base frame 18 on which the device is constrained is then translated by moving along the direction x" up to the intermediate working position to the plurality of spindles 14, where the slender plate is worked simultaneously by the multiple spindles inserted in as many independent systems 11, each system being independently movable according to the directions x, y, z and x', y', z' so as to be able to operate autonomously simultaneous machining on the two faces of the slender plate 4.

At the end of the machining the base frame 18 is translated again moving along the x" direction up to the loading, unloading and inspection position 16, where the device is made to rotate around the axis s'" to bring it back to the horizontal position.

The gripping means 71, 72 then move first along the direction s away from the edge 41 of said plate 4 actuated by the actuators 6 and once they have completed their travel along the transverse direction s they move along the direction s" actuated by the actuators 8' moving away from the surface 42 of the plate 4 until the area above said plate 4 is free from any encumbrance and the discharge of said machined plate 4 by means of a common automatic loading system, such as for example a Cartesian robot, is allowed.

Once the unloading operation is completed, a new slender plate 4 is loaded for further machining.

With reference to the accompanying drawings, described herein is also a preferred embodiment of a method for machining said thin plates to be machined in numerical control machine tools with a plurality of spindles, in particular a method allowing the machining of thin plates with a plurality of spindles for simultaneous machining of opposite sides.

Describing for simplicity of understanding the method with two spindles used simultaneously on two sides of a slender plate 4 rigidly connected to a rotating vise, preferably made according to what was previously described above, which keeps it in position on the sides but free in the work area, the two spindles 4 will operate independently on the two sides always remaining in a position of symmetry both with respect to the axis z"', with the distances y‴1 for the force F1 exerted by the first spindle and with the distance y‴2 for the force F2 exerted by the second spindle constantly equal in the performance of the two machining paths, both with respect to the axis y"', with the distances z‴1 for the force F1 exerted by the first spindle and with the distance z‴2 for the force F2 exerted by the second spindle constantly equal in the performance of the two machining paths.

In this way the two spindles will work the slender plate executing in order the equal paths p1 and p2 on the two sides while maintaining the same distance between them and the z" axis, that is y‴1 and y‴2 and with respect to the y axis"', or z‴1 and z‴2.

In this way the resultant of the applied forces will be constantly equal to zero on the piece, thus minimizing the undesired bending effects locally, i.e. in the areas involved in the machining.

In this way the maximum possible precision is maintained in the machining while significantly increasing the machining efficiency.

In a classic system, in fact, the front surface should be completely machined first, with a time that we can indicate in T1, followed by the back surface, with a time that we can indicate in T2.

In this way the total machining time is given by the sum T1+T2.

Still in the hypothesis of machining instead with two opposed spindles, as described above, both spindles on the two opposite surfaces will start the first machining, but only on half the surface, the total time will therefore be (½)T1, then continuing with the second machining where the time will be similarly (½)T2.

Consequently, the total machining time will be equal to half the time required with a machining performed according to what is known in the state of the art.

What has been illustrated for simplicity for machining with two opposed spindles for machining on a slender plate from both sides can be extended to a plurality of spindles. In the case of a plurality of spindles operating at the same time on the two sides of a slender plate, the same considerations apply to the pairs operating in the manner described above and the total machining time will be equal to (1/n)T1+(1/n)T2.

## Claims

1. Numerical control multi-spindle machine tool with automatic adjustment, comprising
a device for gripping thin plates (4) to be machined in numerical control machine tools with automatic adjustment, comprising
a base frame (18)
a machining plane (P) for the support of a slender plate (4) to be machined,
a first frame (1) integral with the machining plane (P) provided with first gripping means (71),
second gripping means (72) opposed to the gripping means (71) with respect to a lateral edge (41) of the plate (4) and automatically movable in a direction approaching said edge (41) to automatically adjust the mutual distance between the gripping means (71 and 72) as the dimensions of the slender plate (4) to be machined change in a transverse direction (s),
in which said first frame (1) is provided with rotation means (9, 10) to be able to rotate about an axis (s‴) parallel to the plane (P) and orthogonal to the transverse direction (s) to bring the device from a first position (16) for loading and unloading of the machining plane (P), to an operating position (17) of the machining plane (P) during machining of the plate (4),
**characterized in that it comprises,**
guides (30) for moving the base frame (18) of said device for gripping thin plates (4) along one direction (x") between the loading/unloading position and an operating position,
a plurality of spindles (14) arranged at the operating position (17) at least one spindle (14) being operative on each machining surface (42) on each of the two sides of the plate (4) in the machining position (17),
independent actuating means (11) of said spindles (14) arranged to machine simultaneously the two sides of the plate (4).

2. Machine according to claim 1, comprising a plurality of tool storage compartments (13) for equipping said spindles (14).

3. Machine according to one of the preceding claims, wherein said gripping means (71, 72) comprise a surface (74) designed to press on a surface to be machined (42) of the plate (4) parallel to the plane (P), said first and second gripping means (71, 72) can also be actuated, by means of corresponding actuators (8') in order to move along an upward direction (s") away from and towards the surface (42) of the plate (4),

4. Machine according to one of the preceding claims, wherein said gripping means (71, 72) can be actuated independently at least in a displacement direction (s, s").

5. Machine according to one of the preceding claims, wherein said second gripping means (72) are mounted a second frame (2) movable with respect to said first frame (1) along the transverse direction(s).

6. Machine according to one of the preceding claims, wherein said first and second gripping means (71, 72) are actuated by respective actuators (6) along the transverse direction (s) away from and towards the edge (41) of the slender plate (4) in order to free a space for loading and unloading the same on and from the plane P before and after machining and being able to cooperate to grasp the plate (4) as a vise during the machining steps.

7. Machine according to one of the preceding claims, wherein said rotation means comprise a rotating actuator (9) on whose rotating axis the first frame (1) is fixed, fixed to a base frame (18) of the device also provided with a support (10) opposite the rotating actuator (9).

8. Method for machining of a slender plate (4) by means of a multi-spindle machine according to one of the preceding claims, the machine comprising:
a plurality of spindles (14) provided with respective machining tools, at least one spindle (14) being operative on each machining surface (42, 42') on the two sides of the plate (4) in a machining position (17),
independent automatically controlled actuating means (11) of said spindles (14) arranged to approach each of the two opposite surfaces (42, 42') of the plate (4) one or more tools with respective thrust forces exerted along respective machining paths (p1-pn) on the two opposite surfaces (42, 42');
calculation means (40) operatively associated with said actuating means, arranged to calculate the resulting torques (C1, C2) and the resulting forces (F1, F2) respectively applied by said tools acting on the two machining surfaces (42, 42') of the plate,
**characterised in that**
said actuating means (11) are controlled to approach said tools simultaneously on the two machining surfaces (42, 42') of the slender plate (4) in order to perform independently simultaneous machinings on said surfaces (42, 42') according to said paths (p1-pn),
**further characterized in that** said actuating means (11) are driven to bring said tools to said opposite faces (42, 42') of the plate (4) along paths corresponding to equal and opposite values of the torques (C1, C2) and of the forces (F1, F2) applied to the two sides of the slender plate (4).

## Patentansprüche

1. Numerisch gesteuerte Mehrspindel-Werkzeugmaschine mit automatischer Anpassung, umfassend
eine Vorrichtung zum Greifen von dünnen Platten (4), die in numerisch gesteuerten Werkzeugmaschinen mit automatischer Anpassung maschinell zu bearbeiten sind, umfassend
einen Basisrahmen (18),
eine maschinelle Bearbeitungsebene (P) zum Tragen einer maschinell zu bearbeitenden schmalen Platte (4),
einen ersten Rahmen (1), der mit der maschinellen Bearbeitungsebene (P) integral ist und mit ersten Greifmitteln (71) versehen ist,
zweite Greifmittel (72), die zu den Greifmitteln (71) in Bezug auf eine seitliche Kante (41) der Platte (4) entgegengesetzt sind und automatisch in einer Richtung bewegbar sind, sich der Kante (41) annähernd, um den gegenseitigen Abstand zwischen den Greifmitteln (71 und 72) automatisch anzupassen, wenn die Abmessungen der maschinell zu bearbeitenden schmalen Platte (4) sich in einer Querrichtung (s) ändern,
wobei der erste Rahmen (1) mit Drehmitteln (9, 10) versehen ist, um dazu in der Lage zu sein, sich um eine Achse (s‴) zu drehen, die parallel zu der Ebene (P) ist und orthogonal zu der Querrichtung (s) ist, um die Vorrichtung während einer maschinellen Bearbeitung der Platte (4) aus einer ersten Position (16) zum Beladen und Entladen der maschinellen Bearbeitungsebene (P) in eine Betriebsposition (17) der maschinellen Bearbeitungsebene (P) zu bringen,
**dadurch gekennzeichnet, dass** sie umfasst:
Führungen (30) zum Bewegen des Basisrahmens (18) der Vorrichtung zum Greifen von dünnen Platten (4) entlang einer Richtung (x") zwischen der Belade-/Entladeposition und einer Betriebsposition,
mehrere Spindeln (14), die an der Betriebsposition (17) eingerichtet sind, wobei mindestens eine Spindel (14) auf jeder maschinellen Bearbeitungsoberfläche (42) auf jeder von den zwei Seiten der Platte (4) in der maschinellen Bearbeitungsposition (17) betriebsfähig ist,
unabhängige Betätigungsmittel (11) der Spindeln (14), die dazu eingerichtet sind, gleichzeitig die zwei Seiten der Platte (4) maschinell zu bearbeiten.

2. Maschine nach Anspruch 1, umfassend mehrere Werkzeugaufbewahrungsfächer (13) zum Ausrüsten der Spindeln (14).

3. Maschine nach einem der vorhergehenden Ansprüche, wobei die Greifmittel (71, 72) eine Oberfläche (74) umfassen, die dazu entworfen ist, auf eine maschinell zu bearbeitende Oberfläche (42) der Platte (4) zu drücken, die parallel zu der Ebene (P) ist, wobei die ersten und die zweiten Greifmittel (71, 72) auch mittels entsprechender Betätigungselemente (8') betätigt werden können, um sich entlang einer Aufwärtsrichtung (s") von der Oberfläche (42) der Platte (4) weg und zu dieser hin zu bewegen.

4. Maschine nach einem der vorhergehenden Ansprüche, wobei die Greifmittel (71, 72) unabhängig zumindest in einer Verlagerungsrichtung (s, s") betätigt werden können.

5. Maschine nach einem der vorhergehenden Ansprüche, wobei die zweiten Greifmittel (72) an einem zweiten Rahmen (2) montiert sind, der in Bezug auf den ersten Rahmen (1) entlang der Querrichtung (s) bewegbar ist.

6. Maschine nach einem der vorhergehenden Ansprüche, wobei die ersten und die zweiten Greifmittel (71, 72) durch jeweilige Betätigungselemente (6) entlang der Querrichtung (s) von der Kante (41) der schmalen Platte (4) weg und zu dieser hin betätigt werden, um einen Raum zum Beladen und Entladen derselben auf und von der Ebene P vor und nach einer maschinellen Bearbeitung frei zu machen, und dazu in der Lage sind, zusammenzuwirken, um die Platte (4) während der maschinellen Bearbeitungsschritte als eine Schraubzwinge zu greifen.

7. Maschine nach einem der vorhergehenden Ansprüche, wobei die Drehmittel ein Drehbetätigungselement (9) umfassen, auf dessen Drehachse der erste Rahmen (1) befestigt ist, an einem Basisrahmen (18) der Vorrichtung befestigt, der ebenfalls mit einem Träger (10) versehen ist, der zu dem Drehbetätigungselement (9) entgegengesetzt ist.

8. Verfahren zur maschinellen Bearbeitung einer schmalen Platte (4) mittels einer Mehrspindel-Maschine nach einem der vorhergehenden Ansprüche, wobei die Maschine umfasst:
mehrere Spindeln (14), die mit entsprechenden Maschinenwerkzeugen versehen sind, wobei mindestens eine Spindel (14) auf jeder maschinellen Bearbeitungsoberfläche (42, 42') auf beiden Seiten der Platte (4) in einer maschinellen Bearbeitungsposition (17) betriebsfähig ist,
unabhängige automatisch gesteuerte Betätigungsmittel (11) der Spindeln (14), die dazu eingerichtet sind, ein oder mehrere Werkzeuge jeder der zwei entgegengesetzten Oberflächen (42, 42') der Platte (4) mit jeweiligen Schubkräften anzunähern, die entlang jeweiligen maschinellen Bearbeitungswegen (p1-pn) auf den zwei entgegengesetzten Oberflächen (42, 42') ausgeübt werden;
Berechnungsmittel (40), die betriebsfähig mit den Betätigungsmitteln assoziiert sind und dazu eingerichtet sind, die resultierenden Drehmomente (C1, C2) und die resultierenden Kräfte (F1, F2) zu berechnen, die jeweils durch die Werkzeuge angewendet werden, die auf die zwei maschinellen Bearbeitungsoberflächen (42, 42') der Platte wirken,
**dadurch gekennzeichnet, dass**
die Betätigungsmittel (11) dazu gesteuert werden, die Werkzeuge gleichzeitig auf den zwei maschinellen Bearbeitungsoberflächen (42, 42') der schmalen Platte (4) anzunähern, um unabhängige gleichzeitige maschinelle Bearbeitungen auf den Oberflächen (42, 42') gemäß den Wegen (p1-pn) durchzuführen,
weiterhin **dadurch gekennzeichnet, dass** die Betätigungsmittel (11) dazu angetrieben werden, die Werkzeuge zu den entgegengesetzten Flächen (42, 42') der Platte (4) entlang Wegen zu bringen, die gleichen und entgegengesetzten Werten der Drehmomente (C1, C2) und der Kräfte (F1, F2) entsprechen, die auf beide Seiten der schmalen Platte (4) angewendet werden.

## Revendications

1. Machine-outil multibroches à commande numérique à réglage automatique, comprenant
un dispositif de préhension de plaques minces (4) devant être usinées dans des machines-outils à commande numérique à réglage automatique, comprenant un cadre de base (18)
un plan d'usinage (P) pour le support d'une plaque fine (4) devant être usinée,
un premier cadre (1) d'un seul tenant avec le plan d'usinage (P) doté de premiers moyens de préhension (71), des deuxièmes moyens de préhension (72) opposés aux moyens de préhension (71) par rapport à un bord latéral (41) de la plaque (4) et mobiles automatiquement dans une direction s'approchant dudit bord (41) pour régler automatiquement la distance mutuelle entre les moyens de préhension (71 et 72) à mesure que les dimensions de la plaque fine (4) devant être usinée changent dans une direction transversale (s),
dans laquelle ledit premier cadre (1) est doté de moyens de rotation (9, 10) pour être apte à tourner autour d'un axe (s‴) parallèle au plan (P) et orthogonal à la direction transversale (s) pour amener le dispositif d'une première position (16) de chargement et de déchargement du plan d'usinage (P), à une position de fonctionnement (17) du plan d'usinage (P) pendant l'usinage de la plaque (4),
**caractérisée en ce qu'elle comprend,**
des guides (30) pour déplacer le cadre de base (18) dudit dispositif de préhension de plaques minces (4) le long d'une direction (x") entre la position de chargement/déchargement et une position de fonctionnement, une pluralité de broches (14) agencées au niveau de la position de fonctionnement (17), au moins une broche (14) pouvant fonctionner sur chaque surface d'usinage (42) sur chacun des deux côtés de la plaque (4) dans la position d'usinage (17),
des moyens d'actionnement (11) indépendants desdites broches (14) agencés pour usiner simultanément les deux côtés de la plaque (4).

2. Machine selon la revendication 1, comprenant une pluralité de compartiments de stockage d'outil (13) pour l'équipement desdites broches (14).

3. Machine selon l'une des revendications précédentes, dans laquelle lesdits moyens de préhension (71, 72) comprennent une surface (74) conçue pour appuyer sur une surface devant être usinée (42) de la plaque (4) parallèle au plan (P), lesdits premiers et deuxièmes moyens de préhension (71, 72) peuvent également être actionnés, au moyen d'actionneurs (8') correspondants afin de se déplacer le long d'une direction vers le haut (s") s'écartant de la surface (42) de la plaque (4) et vers celle-ci.

4. Machine selon l'une des revendications précédentes, dans laquelle lesdits moyens de préhension (71, 72) peuvent être actionnés indépendamment au moins dans une direction de déplacement (s, s").

5. Machine selon l'une des revendications précédentes, dans laquelle lesdits deuxièmes moyens de préhension (72) sont montés sur un deuxième cadre (2) mobile par rapport audit premier cadre (1) le long de la direction transversale (s).

6. Machine selon l'une des revendications précédentes, dans laquelle lesdits premiers et deuxièmes moyens de préhension (71, 72) sont actionnés par des actionneurs (6) respectifs le long de la direction transversale (s) s'écartant du bord (41) de la plaque fine (4) et vers celui-ci afin de libérer un espace pour le chargement et le déchargement de celle-ci sur le plan P et à partir de celui-ci avant et après l'usinage et étant aptes à coopérer pour saisir la plaque (4) à la façon d'un étau pendant les étapes d'usinage.

7. Machine selon l'une des revendications précédentes, dans laquelle lesdits moyens de rotation comprennent un actionneur rotatif (9) sur l'axe de rotation duquel le premier cadre (1) est fixé, fixé à un cadre de base (18) du dispositif également doté d'un support (10) opposé à l'actionneur rotatif (9).

8. Procédé d'usinage d'une plaque fine (4) au moyen d'une machine multibroches selon l'une des revendications précédentes, la machine comprenant :
une pluralité de broches (14) dotées d'outils d'usinage respectifs, au moins une broche (14) pouvant fonctionner sur chaque surface d'usinage (42, 42') sur les deux côtés de la plaque (4) dans une position d'usinage (17),
des moyens d'actionnement à commande automatique (11) indépendants desdites broches (14) agencés pour approcher de chacune des deux surfaces (42, 42') opposées de la plaque (4) un ou plusieurs outils avec des forces de poussée respectives exercées le long de trajets d'usinage (p1-pn) respectifs sur les deux surfaces (42, 42') opposées ;
des moyens de calcul (40) associés fonctionnellement auxdits moyens d'actionnement, agencés pour calculer les couples (C1, C2) résultants et les forces (F1, F2) résultantes respectivement appliqués par lesdits outils agissant sur les deux surfaces d'usinage (42, 42') de la plaque,
**caractérisé en ce que**
lesdits moyens d'actionnement (11) sont commandés pour approcher lesdits outils simultanément sur les deux surfaces d'usinage (42, 42') de la plaque fine (4) afin de réaliser indépendamment des usinages simultanés sur lesdites surfaces (42, 42') selon lesdits trajets (p1-pn), **en outre caractérisé en ce que** lesdits moyens d'actionnement (11) sont entraînés pour amener lesdits outils avec lesdites faces (42, 42') opposées de la plaque (4) le long de trajets correspondant à des valeurs égales et opposées des couples (C1, C2) et des forces (F1, F2) appliqués sur les deux côtés de la plaque fine (4).
